# EUROPÄISCHE PATENTANMELDUNG

(11) **EP 4 651 045 A1**
(43) Veröffentlichungstag der Anmeldung: **19.11.2025**
(21) Anmeldenummer: 24176485.1
(22) Anmeldetag: 17.05.2024
(51) Int. Cl.: G06Q 10/04, G06Q 10/087, G06Q 30/0202, B65G 1/04, B65G 1/137

(54) **SYSTEM ZUR OPTIMIERTEN VERWENDUNG EINES SORTIERFÖRDERERS, INSBESONDERE EINES TASCHENSORTERS**

(71) Anmelder: BEUMER Group GmbH & Co. KG, 59269 Beckum (DE)
(72) Erfinder: Bauer, David, 8045 Graz (AT)
(74) Vertreter: Angerhausen, Christoph

(57) **Zusammenfassung**

Die vorliegende Erfindung betrifft ein System zur optimierten Verwendung eines Sortierförderers, insbesondere eines Taschensorters, mit einem Sortierförderer, der zum Zusammenstellen von Artikeln zu Kundenaufträgen entsprechenden Packaufträgen eingerichtet ist, wobei der Sortierförderer einen Puffer für die Zwischenlagerung von Artikeln aufweist, und wobei der Puffer fördertechnisch mit einem Warenlager verbindbar ist; und mit einer Systemsteuerungseinrichtung, welche dazu eingerichtet ist:
- eine für einen künftigen Zeitabschnitt erwartete Artikelnachfrage zu bestimmen;
- den Transfer der der erwarteten Artikelnachfrage entsprechenden Artikel vom Warenlager an den Puffer zu veranlassen;
- die für den Zeitabschnitt tatsächlich benötigten Artikel anhand von eingegangenen Kundenaufträgen zu bestimmen;
- die tatsächlich benötigten Artikel mit den im Puffer befindlichen Artikeln abzugleichen, um die zur Erfüllung der eingegangenen Kundenaufträge fehlenden Artikel zu bestimmen;
- und den Transfer der fehlenden Artikel vom Warenlager an den Puffer zu veranlassen.

## Beschreibung

Die Erfindung geht aus von einem Sortierförderers, welcher zum Zusammenstellen von Artikeln zu Kundenaufträgen entsprechenden Packaufträgen eingerichtet ist, wobei der Sortierförderer einen Puffer für die Zwischenlagerung von Artikeln aufweist, und wobei der Puffer über eine Schnittstelle mit einem Warenlager verbindbar ist, wobei an der Schnittstelle Artikel zwischen dem Puffer und dem Warenlager transferiert werden können. Ein derartiger Sortierförderer ist beispielsweise bekannt aus der Druckschrift DE 10 2018 209 266 A1.

Der bekannte Sortierförderer weist jedoch den Nachteil auf, dass der Puffer erst nach dem Eingang von konkreten Kundenaufträgen mit den bestellten Artikeln beladen wird beziehungsweise hinsichtlich Kosteneffizienz nicht oder nur begrenzt als Lagerbereich verwendet wird/werden kann. Zudem werden die eingehenden Kundenaufträge zunächst im Unternehmensressourcenplanungsmodul akkumuliert, bevor diese an das Lagerverwaltungssystem bzw. Steuerungsmodul des Warenlagers oder des Sortierförderers weitergeleitet werden, sodass es auch unter dem Gesichtspunkt der Einhaltung einer gewünschten Zeit vom Eingang einer Bestellung bis zur Lieferung der Ware an den Kunden zeitweilig zu einem sehr großen Bearbeitungsaufkommen für den Warentransfer zwischen Warenlager und Sortierförderer kommt und das Bearbeitungsaufkommen zu anderen Zeitpunkten sehr niedrig ist.

Es ist daher die Aufgabe der Erfindung, ein System zur optimierten Verwendung eines Sortierförderers bereitzustellen, mittels welchem das Beladen des Puffers gleichmäßiger erfolgen kann.

Die Aufgabe wird gelöst mit den Merkmalen des unabhängigen Anspruchs. Vorteilhafte Ausgestaltungen der Erfindung sind darüber hinaus jeweils in den Unteransprüchen angegeben.

Demgemäß ist vorgesehen, dass das System eine Systemsteuerungseinrichtung aufweist, welche dazu eingerichtet ist:
- eine für einen künftigen Zeitabschnitt erwartete Artikelnachfrage zu bestimmen oder zu erhalten;
- und den Transfer der der erwarteten Artikelnachfrage entsprechenden Artikel vom Warenlager an den Puffer zu veranlassen.

Bei einem optimalen Verwendungszustand des Systems wird der Puffer bereits durch die Artikel der erwarteten Artikelnachfrage mit sämtlichen Artikeln befüllt, welche in der kommenden Periode dann auch tatsächlich bestellt werden. Dabei kann der Algorithmus beispielsweise so eingestellt werden, dass Artikel bereits bei einer geringfügigen Bestellwahrscheinlichkeit in den Puffer transferiert werden.

Es kann ferner vorgesehen sein, dass die Systemsteuerungseinrichtung ferner dazu eingerichtet ist:
- die für den Zeitabschnitt tatsächlich benötigten Artikel anhand von eingegangenen Kundenaufträgen zu bestimmen;
- die tatsächlich benötigten Artikel mit den im Puffer befindlichen Artikeln abzugleichen, um die zur Erfüllung der eingegangenen Kundenaufträge fehlenden Artikel zu bestimmen;
- und den Transfer der fehlenden Artikel vom Warenlager an den Puffer zu veranlassen.

Die Vorteile der Erfindung und insbesondere des Prognostizierens von zukünftig bestellten Artikeln bestehen darin, dass die für den Transfer von Artikeln vom Warenlager zum Sortierförderer vorgesehene Logistik gleichmäßiger ausgelastet werden kann. Dadurch werden Belastungsspitzen vermieden und Arbeitskräfte effizienter eingesetzt und/oder eingespart werden. Ferner wird der Planungsaufwand für Operations Manager reduziert, da der Aufwand für die Abstimmung von Arbeitsabläufen reduziert wird. Darüber hinaus können durch die gleichmäßigere Auslastung Arbeitsstationen abgebaut werden, welche zuvor für das Bewältigen von Belastungsspitzen vorgehalten werden mussten. Ein weiterer großer Vorteil besteht durch das frühzeitige Beladen des Puffers bereits vor Auftragseingang bzw. einer kontinuierlichen Befüllung des Taschensortiersystems in einer verbesserten Ressourcenausnutzung und einer deutlichen Verkürzung von Auftragsdurchlaufzeiten und in einer damit verbundenen Reduzierung der Wartezeit für die Konsolidierung der zur Bewältigung der Kundenaufträge benötigten Artikel im Puffer. Ferner liegt durch die Kombination der Verwendung einer intelligenten Auftrags- und/oder Demand Forecast Software/KI (z.B. einer KI mit der Absicht, die Aufträge für eine kommende Periode zu prognostizieren) und beispielsweise einem zur Lagerung von Single Piece Items in einer Tasche bestimmten Moduls eines Taschensortiersystems, der Vorteil in einer besseren Gesamtnutzung des Lagersystems und Auftragsmanagements. Insgesamt ermöglicht die Erfindung durch die potenzielle Einsparung von Kommissionierbereichen zur Vorkommissionierung sowie Einsparungsmöglichkeit von Personal zudem ein großes Kosteneinsparpotenzial.

Der Puffer kann fördertechnisch so mit einem Warenlager verbindbar sein, dass beispielsweise eine Schnittstelle zwischen Warenlager und Puffer vorgesehen ist, an welcher eine Übergabe von Artikeln vom Warenlager an den Puffer erfolgen kann. Beispielsweise kann das Warenlager eine eigene Fördertechnik aufweisen, mittels welcher die Schnittstelle angefahren werden kann. Auch der Puffer kann eine eigene Fördertechnik aufweisen, mittels welcher die Schnittstelle angefahren werden kann. Die Übergabe von Artikeln an der Schnittstelle kann automatisch erfolgen. Ferner kann die Übergabe von Artikeln an der Schnittstelle durch Personal erfolgen. Beispielsweise kann der Puffer fördertechnisch in einen Taschensorter eingebunden sein, welcher eine Vielzahl von Transporttaschen aufweist. An der Schnittstelle kann ein Beladen der Transporttaschen mit Artikeln aus dem Warenlager erfolgen, vorzugsweise wird dabei jeweils ein Artikel in eine Transporttasche geladen. Das System kann ferner eine an der Schnittstelle zwischen dem Warenlager und dem Sortierförderer angeordnete Beladestation zum Beladen der Transporteinheiten des Sortierförderers mit Artikeln aus dem Warenlager aufweisen. Dabei kann die Beladestation fördertechnisch mit dem Puffer verbunden sein. Alternativ kann vorgesehen sein, dass das Warenlager und der Puffer über eine gemeinsame Fördertechnik miteinander verbunden sind.

Dass Bestimmen der für einen künftigen Zeitabschnitt erwarteten Artikelnachfrage kann durch Einsatz einer Software bewerkstelligt werden, welche zum Erzeugen einer intelligenten Vorhersage/Order Prediction etc. eingerichtet ist. Dadurch kann der Puffer, der im Stand der Technik hauptsächlich zur Konsolidierung von vorkommissionierten Aufträgen dient, weiterhin kosteneffizient als Lagersystem verwendet werden. Das System kann dazu eingerichtet sein, die erwartete Artikelnachfrage selbsttätig zu bestimmen. Alternativ kann vorgesehen sein, dass die Daten betreffend die erwartete Artikelnachfrage von einem externen System bezogen werden. Die Daten können beispielsweise aus einem externen ERP System bezogen werden. Die externen Daten können mit einer Schnittstelle, beispielsweise API, an die Systemsteuerungseinrichtung gesendet werden. Es kann beispielsweise vorgesehen sein, dass das Bestimmen der erwarteten Artikelnachfrage als externe Dienstleistung bezogen wird und an die Systemsteuerungseinrichtung übertragen wird.

Order Prediction bezieht sich auf die Vorhersage von Kundenbestellungen oder Käufen. Es ist eine Vorhersage darüber, welche Produkte Kunden voraussichtlich als nächstes kaufen, beispielsweise basierend auf seinem bisherigen Kaufverhalten, seinen Vorlieben und anderen relevanten Daten. Order Prediction wird oft in E-Commerce-Plattformen eingesetzt, um personalisierte Empfehlungen für Kunden zu generieren und das Einkaufserlebnis zu verbessern. So kann beispielsweise vorgesehen sein, dass die Systemsteuerungseinrichtung dazu eingerichtet ist, die für einen künftigen Zeitabschnitt erwartete Artikelnachfrage aus in vergangenen Zeitabschnitten, in Echtzeit und/oder in Prognosen erhobenen Kundenauftragsdetails zu bestimmen. Dabei können alle erdenklichen verfügbaren Daten miteinbezogen werden. Beispielsweise kann berücksichtig werden, wenn eine prominente Persönlichkeit beispielsweise ein rotes T-Shirt bestellt, oder die Wettervorhersage für die kommenden Tage. Die Software kann auf einem KI-Algorithmus beruhen oder diesen aufweisen.

Es kann vorgesehen sein, dass die erwartete Artikelnachfrage auf Basis mindestens einer der folgenden Datenquellen bestimmt wird:
Umsatz- und Einnahmedaten, Besucherdaten, Traffic-Quellen, Produktleistungen, Kundenverhalten, Historische Verkaufsdaten, Kundenverhalten, Lagerbestandsdaten, Preisentwicklungen, Saisonalitäten, Marketingaktivitäten und/oder Trends aus dem Internet.

Ferner ist denkbar, dass das Bestimmen der für einen künftigen Zeitabschnitt erwarteten Artikelnachfrage auf Basis mindestens eines der folgenden Schritte erfolgt: Beziehen von Echtzeitdaten, Laden der Echtzeitdaten, Definieren von Merkmalen und/oder Zielvariablen, Aufteilen der Daten in zumindest ein Trainings- und zumindest ein Testset, Erstellen und Trainieren eines Modells, Treffen von Vorhersagen, Vergleichen der Vorhersagen mit tatsächlichen Werten.

Es kann ein Algorithmus für das Bestimmen der für einen künftigen Zeitabschnitt erwarteten Artikelnachfrage vorgesehen sein, welcher durch maschinelles Lernen und/oder künstliche Intelligenz dazu eingerichtet ist, die Genauigkeit der erwarteten Artikelnachfrage zu optimieren.

Das Bestimmen einer erwarteten Artikelnachfrage für einen künftigen Zeitabschnitt kann kontinuierlich erfolgen. Alternativ kann das Bestimmen der erwarteten Artikelnachfrage für einen künftigen Zeitabschnitt periodisch erfolgen.

Es kann vorgesehen sein, dass die Systemsteuerungseinrichtung dazu eingerichtet ist, den Transfer der der erwarteten Artikelnachfrage des künftigen Zeitabschnitts entsprechenden Artikel vom Warenlager an den Puffer zu veranlassen, bevor die entsprechenden Kundenaufträge vollständig eingegangen sind.

Der Sortierförderer kann dazu eingerichtet sein, die den Kundenaufträgen entsprechenden Packaufträge aus den im Puffer befindlichen Artikeln zusammenzustellen. Das Zusammenstellen kann derart erfolgen, dass die entsprechenden Artikel an einer vorbestimmten Endstelle entladen werden. Dazu können sämtliche Taschen, welche Artikel des entsprechenden Packauftrags enthalten, die Endstelle passieren und dort derart angesteuert und/oder manipuliert sein, dass ein öffenbarer, durch zwei Seitenwände gebildeter und durch eine Kupplung verbundener, Taschenboden an der Endstelle geöffnet wird, so dass der Artikel an der Endstelle aus der Tasche entladen wird. Die Kupplungen der Taschen können derart ausgebildet sein, dass diese nach dem Entladen den Taschenboden wieder automatisch verschließen. Zum Entladen kann der Sortierförderer zumindest eine Entladestation aufweisen, welche zum Abladen der einem jeweiligen Packauftrag entsprechenden Artikel dient. Die Entladestation kann ferner dazu eingerichtet sein, den Taschenboden der Taschen zu öffnen und/oder wieder zu verschließen.

Das System kann ferner dazu eingerichtet sein, Artikelretouren in den Puffer einzuspeisen. Dadurch können unnötige manuelle Arbeitsschritte vermieden werden, da die Retouren wieder direkt aus dem Puffer für kommende Packaufträge berücksichtig werden können, ohne dass sie an das Warenlager zurückgeschickt oder nochmals kommissioniert werden müssten.

Die Systemsteuerungseinrichtung ferner dazu eingerichtet ist, den Transfer zumindest eines Teils der nach Bearbeitung der Kundenaufträge für den Zeitabschnitt nicht benötigten Artikel vom Puffer zurück an das Warenlager zu veranlassen. Die Rückführung kann insbesondere diejenigen Artikel im Puffer betreffen, welche nicht absehbar erneut für eine künftige Kundenbestellung prognostiziert wurden.

Demgegenüber kann vorgesehen sein, dass erneut prognostizierte Artikel im Puffer verbleiben.

Es kann vorgesehen sein, dass der Puffer Teil des Sortierförderers ist. Der Puffer kann mehrere Sortierschleifen aufweisen, wobei in jeder der Sortierschleifen eine vorbestimmte Anzahl an Transporteinheiten, insbesondere Transporttaschen zwischenspeicherbar ist. Der Puffer kann ferner skalierbar ausgeführt sein. Der Puffer kann insofern dazu eingerichtet sein, eine Mehrzahl Transporteinheiten zwischenzuspeichern, welche jeweils zur Aufnahme einzelner Artikel eingerichtet sind.

Die Systemsteuerungseinrichtung kann ein Modul sein, dass Daten und/oder Befehle an ein ERP, ein WMS oder Materialflussrechner überträgt. Die Systemsteuerungseinrichtung kann alternativ mehrere Module aufweisen, welche zum Steuern und/oder Verwalten bestimmter Teilfunktionen des Systems eingerichtet sein können. Beispielsweise kann ein Unternehmensressourcenplanungsmodul vorgesehen sein, welches zum Empfangen und Verarbeiten der Kundenaufträge eingerichtet sein kann. Ferner kann die Systemsteuerungseinrichtung ein Lagerverwaltungssystem zur Verwaltung des Warenlagers aufweisen, welches dazu eingerichtet sein kann, seitens des Unternehmensressourcenplanungsmoduls Informationen über die den Kundenaufträgen entsprechenden Artikel zu erhalten. Die Systemsteuerungseinrichtung kann ferner ein Steuerungsmodul aufweisen, welches zum Steuern des Warenlagers/und oder des Puffers und/oder des Sortierförderers eingerichtet sein kann. Das Steuerungsmodul kann dazu eingerichtet sein. seitens des Lagerverwaltungssystems und/oder des Unternehmensressourcenplanungsmoduls erhaltene Informationen über die den Kundenaufträgen entsprechenden Artikel so zu verarbeiten, dass die Fördertechnik des Warenlagers/und oder des Puffers und/oder des Sortierförderer so angesteuert ist, dass die entsprechenden Artikel letzten Endes als Packauftrag an einer bestimmten Endstelle des Sortierförderers abgeladen werden.

Ein entsprechender Betriebsablauf des Systems kann demnach vorsehen, dass zunächst durch die Software zur Vorhersage von Kundenbestellungen eine erste Mehrzahl Artikel bestimmt wird, welche an der Schnittstelle zwischen Warenlager und Puffer bereitzustellen sind, wobei eine entsprechende Information an das Steuerungsmodul zum Steuern des Warenlagers/und oder des Puffers und/oder des Sortierförderers übertragen werden kann, um die Fördertechnik zum Bereitstellen an der Schnittstelle zu veranlassen. Anschließend wird eine zweite Mehrzahl Artikel bestimmt, welche sich aus der Differenz zwischen der ersten Mehrzahl Artikel und den tatsächlich per Kundenauftrag bestellten Artikeln ergibt. Diese zweite Mehrzahl kann dann ebenfalls an der Schnittstelle bereitgestellt bzw. die Fördertechnik zur Bereitstellung veranlasst werden. Es kann dann vorgesehen sein, dass die Artikel händisch und/oder per automatisiertem Lager- und Bereitstellungssystem an der Schnittstelle an den Puffer bzw. den Sortierförderer übergeben werden. Der Sortierförderer kann dann aus den im Puffer befindlichen Artikeln die jeweiligen Packaufträge zusammenstellen und diese an jeweiligen Endstellen abladen. Die Endstellen können sich in einem Packbereich befinden, in welchem die Packaufträge dann verpackt und zur Auslieferung vorbereitet werden können.

Die Durchlaufzeit einer Bestellung wird durch das System verkürzt. Durch eine kontinuierliche Befüllung des Taschensortiersystems weist das System eine verbesserte Ressourcenausnutzung auf. Die Cut-off-Zeit kann später angesetzt werden, so dass die Bestellung früher beim Endverbraucher ist. Die Gesamtdurchlaufzeit kann drastisch reduziert werden. Wenn die Auftragsnachfrage vorhergesagt werden kann, ist es möglich, weniger Mitarbeiter ständig mit der Vorkommissionierung zu beschäftigen, anstatt viele Mitarbeiter zur Bewältigung der Spitzen einzusetzen. Wenn man sich mit Rücksendungen befassen muss und die Funktion der Auftragsvorhersage verfügbar ist, können "gute" Rücksendungen im Puffer belassen und "schlechte" (nicht benötigte) Rücksendungen früher aus dem Puffer entfernt werden, um wertvollen Platz für die vorhergesagte, tatsächliche Nachfrage freizugeben.

Weitere Einzelheiten der Erfindung werden anhand der nachstehenden Figuren erläutert. Dabei zeigt:
- Fig. 1: ein Flussdiagramm des Betriebsablauf einer beispielhaften Ausführungsform der Erfindung;
- Fig. 2: ein Flussdiagramm des Betriebsablauf eines aus dem Stand der Technik bekannten Systems;
- Fig. 3: ein Ablaufschema des Betriebsablauf eines aus dem Stand der Technik bekannten Systems;
- Fig. 4: ein Flussdiagramm des Betriebsablauf einer beispielhaften Ausführungsform der Erfindung;
- Fig. 5: ein Ablaufschema des Betriebsablauf einer beispielhaften Ausführungsform der Erfindung.

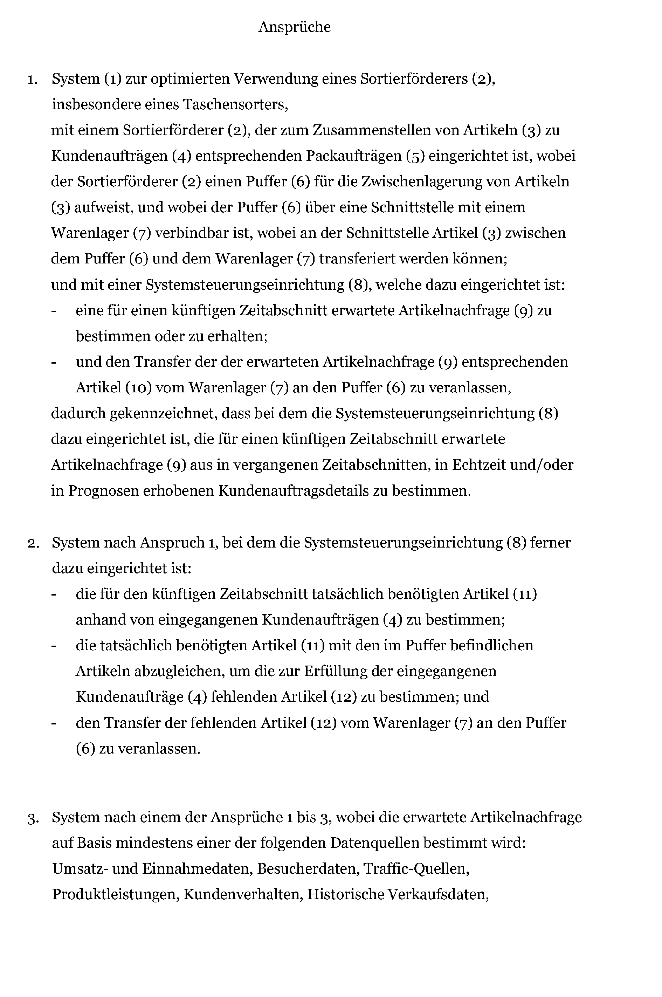

Fig. 1 zeigt beispielhaft ein Flussdiagramm des Betriebsablauf einer Ausführungsform der Erfindung. Ein Endkunde bestellt im Rahmen eines Kundenauftrags 4 dabei über einen Onlineshop eine Anzahl Artikel. Der Onlineshop ist mit einem Unternehmensressourcenplanungsmodul (ERP) 16 verbunden, welches zur Annahme und Verwaltung von Kundenaufträgen dient. Die Information betreffend die tatsächlich bestellten Artikel 3 wird vom ERP 16 an ein Lagerverwaltungssystem 17 übertragen. Die Gesamtmenge aller innerhalb einer festlegbaren Zeitspanne bestellten Artikel 3 aus einer Vielzahl von Kundenaufträgen 4 ergibt die tatsächlich für den Zeitabschnitt benötigten Artikel 11. Bereits zuvor wurde bereits durch eine Bestellvorhersagesoftware 21 prognostiziert, welche Artikel (Art, Menge, Anzahl) in der Zeitspanne voraussichtlich nachgefragt werden, woraus eine Gesamtmenge an prognostizierten Artikeln 10 bestimmt wird. Durch das Prognostizieren von künftig bestellten Artikeln 3 und dem damit verbundenen frühzeitigen Einschleusen der entsprechenden Waren in den Puffer 6 entsteht eine Normalisierung von Aufträgen, die Übergabelogistik zwischen Warenlager 7 und Sortierförderer 2 kann gleichmäßig ausgelastet werden, ohne dass wie im Stand der Technik Spitzenlasten auftreten, für welche mehr Ressourcen wie Personal und/oder Planungsaufwand bereitgestellt werden müssten. Im Lagerverwaltungssystem 17 werden die prognostizierten Artikel 10 und die tatsächlich bestellten Artikel 11 akkumuliert und beispielsweise in Wellen 19 die entsprechenden Informationen an das Steuerungsmodul 18 übersendet. Das Steuerungsmodul 18 veranlasst die Fördertechnik des Warenlagers 7 zum Bereitstellen der Artikel 3 an einer Beladestation 14, welche an einer Schnittstelle zwischen Warenlager 7 und Sortierförderer 2 bzw. Puffer 6 angeordnet ist. An der Beladestation 14 erfolgt das automatische und/oder händische Beladen der Transporteinheiten des Sortierförderers 2 mit einzelnen Artikeln 3. Das Steuerungsmodul 18 veranlasst anschließend den Transfer der Transporteinheiten von der Beladestation 14 an den Puffer 6. Im Sortierförderer 2 werden die im Puffer 6 befindlichen Artikel 3 zu Packaufträgen 5 sortiert bzw. zusammengestellt, welche jeweils einem der Kundenaufträge 4 entsprechen. An einer Entladestation 15 werden die Artikel 3 eines Packauftrags 5 entladen und verpackt bzw. für den Versand vorbereitet. Nach Auftragsfreigabe 20 werden die Pakete zum Endkunden geliefert.

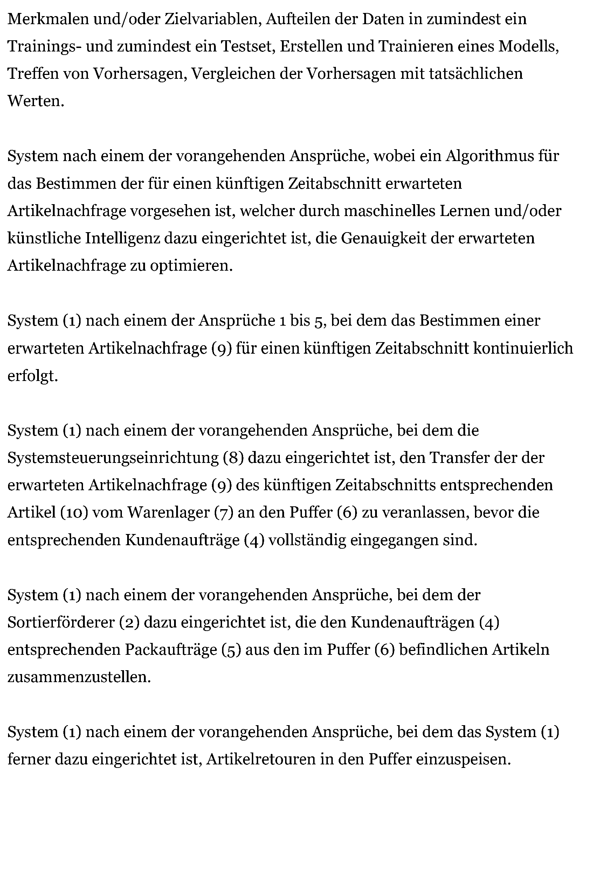

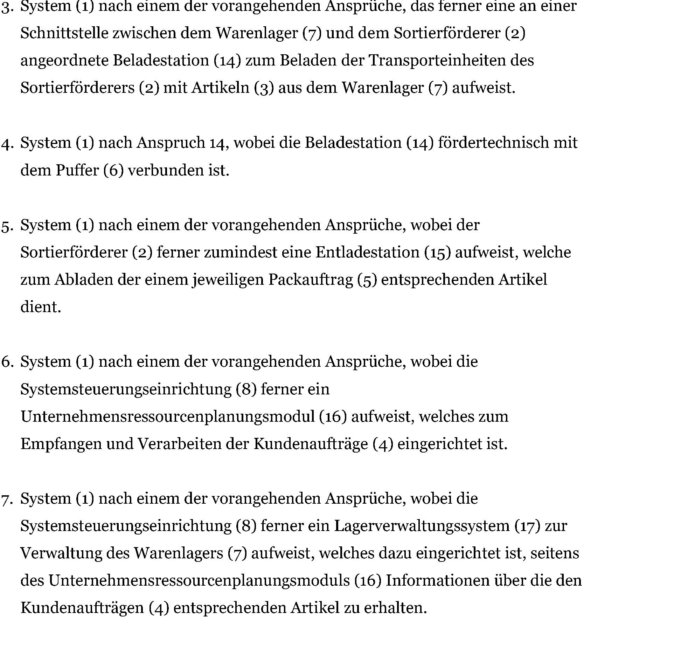

Die Fig. 2 und Fig. 3 zeigen demgegenüber ein aus dem Stand der Technik bekanntes System zum Betreiben eines Sortierförderers. Dieses unterscheidet sich im Wesentlichen darin vom erfindungsgemäßen System, dass keine Kundenaufträge prognostiziert werden und ein Beladen des Puffers 6 erst ab dem Eingang von tatsächlichen Kundenaufträgen 4 erfolgt, und dies dann konsequenterweise auch nur mit den tatsächlich bestellten Artikeln 11. Fig. 2 zeigt dazu den Verwaltungsablauf zur Betreibung des Systems. Zunächst gehen Kundenbestellungen 4 ein, welche beispielsweise über einen Onlineshop getätigt werden und darüber in ein ERP 16 eingespeist werden. Das ERP teilt anschließend einem Lagerverwaltungssystem 17 die bereitzustellenden Artikel 3 mit. Das Lagerverwaltungssystem akkumuliert die Artikel 3 und veranlasst ein Steuerungsmodul 18 eines Warenlagers 7 und/oder Sortierförderers 2 beispielsweise wellenweise dazu, die entsprechenden Artikel vom Warenlager 7 an den Puffer 6 zu transferieren. An einer Beladestation 14 erfolgt ein auftragsspezifisches Picken der benötigten Artikel 3 und das Beladen von Transporteinheiten des Sortierförderers 2 mit den jeweiligen Artikeln. Anschließend werden die Transporteinheiten in den Puffer 6 eingespeist. Eine Auftragsfreigabe 20 löst das Zusammenstellen von den Kundenbestellungen 4 entsprechenden Packaufträgen 5 im Sortierförderer, das Entladen der Artikel an einer Entladestation 15 sowie das Verpacken der Artikel 3 und das Versenden der gepackten Pakete aus.

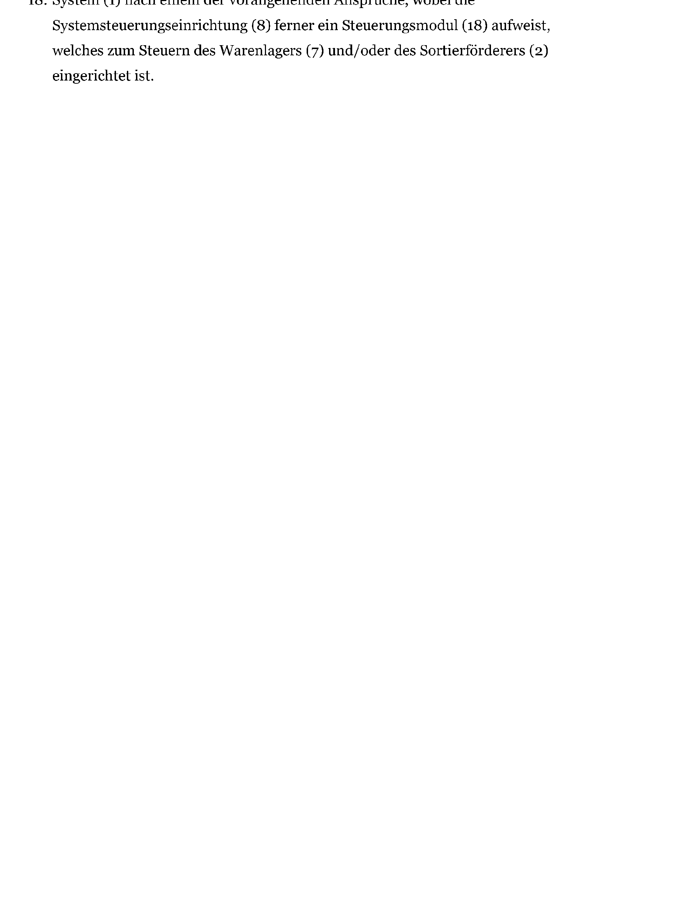

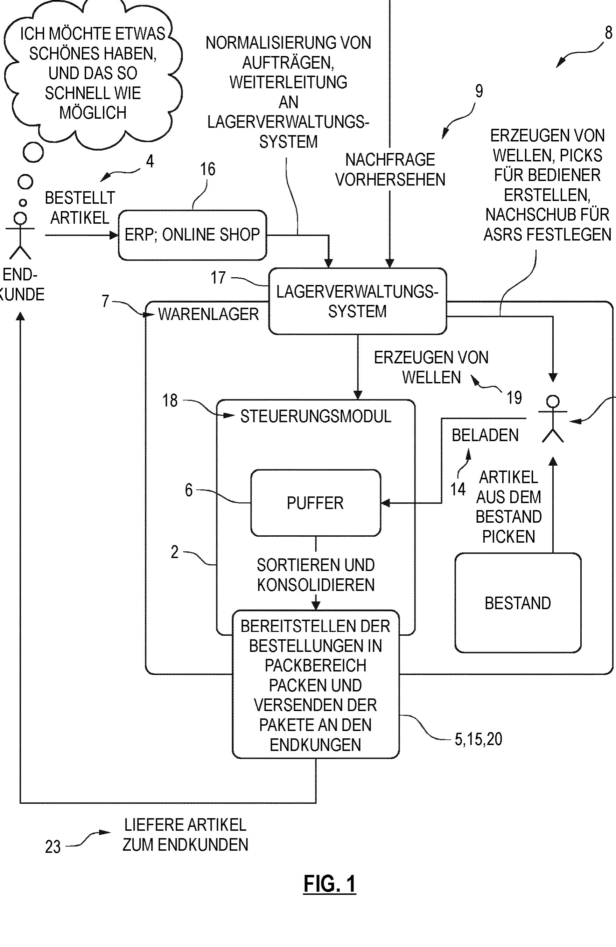

In den Fig. 4 und 5 ist eine Ausführungsform des erfindungsgemäßen Systems 1 dargestellt. Gegenüber der Darstellung in Fig. 2 zeigt Fig. 4 insbesondere das zusätzliche Prognostizieren einer Bestellvorhersage 21 und das Transferieren der erwarteten Bestellungen als antizipierter Nachschub 10 an den Puffer 6. Lediglich ergänzend werden dann die zur Erfüllung der Kundenbestellungen 4 im Puffer 6 noch fehlenden Artikel 12 nachträglich vom Warenlager 7 an den Puffer 6 transferiert. Dazu berechnet das Lagerverwaltungssystem 17 die Differenz zwischen bereits im Puffer 6 befindlichen Artikeln bzw. prognostizierten Artikeln 10, welche noch auf dem Weg in den Puffer 6 sind und den Artikeln 11, welche tatsächlich bestellt wurden, um dann den Transfer der noch fehlenden Artikel 12 an den Puffer 6 zu veranlassen. Das erfindungsgemäße System 1 kann ferner die Funktion aufweisen, dass nicht ausgewählte Artikel aus dem Puffer 6 entfernt werden. Dies können beispielsweise falsch prognostizierte Artikel oder Artikel von zwischenzeitlich stornierten Bestellungen sein. Dabei kann vorgesehen sein, dass von diesen Artikeln jedoch diejenigen im Puffer 6 verbleiben, welche für einen künftigen Zeitabschnitt erneut prognostiziert wurden oder zwischenzeitlich tatsächlich durch einen anderen Kunden bestellt wurden.

Fig. 5 zeigt anschaulich, dass durch die Verwendung der Bestellvorhersagesoftware 21 der Anteil an zu pickenden Artikeln 3, welche nicht prognostiziert, aber tatsächlich bestellt wurden, deutlich reduziert wird. Da dieser Anteil an fehlenden Artikeln 12 aufgrund der erst nach Eingang der entsprechenden Kundenaufträge 4 möglichen Einschleusung in den Puffer 6 zum Erzielen einer schnellen Auslieferung an den Kunden besonders schnell vom Warenlager 7 in den Puffer 6 transferiert werden muss, weist diese Reduktion den Vorteil auf, dass die Zeit zwischen Bestellung und Auslieferung stark reduziert werden kann und zudem kein großer Personal- bzw. Ressourcenbestand zur Bewältigung dieses Aufkommens vorgehalten werden muss.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: System
- 2: Sortierförderer
- 3: Artikel
- 4: Kundenauftrag
- 5: Packauftrag
- 6: Puffer
- 7: Warenlager
- 8: Systemsteuerungseinrichtung
- 9: erwartete Artikelnachfrage
- 10: der erwarteten Artikelnachfrage entsprechende Artikel
- 11: für Zeitabschnitt tatsächlich benötigte Artikel
- 12: fehlende Artikel
- 13: nicht benötigte Artikel
- 14: Beladestation
- 15: Entladestation
- 16: Unternehmensressourcenplanungsmodul
- 17: Lagerverwaltungssystem
- 18: Steuerungsmodul
- 19: Welle
- 20: Auftragsfreigabe
- 21: Bestellvorhersage-Software
- 22: Entfernen nicht ausgewählter Artikel aus dem System
- 23: Auslieferung

## Patentansprüche

1. System (1) zur optimierten Verwendung eines Sortierförderers (2), insbesondere eines Taschensorters,
mit einem Sortierförderer (2), der zum Zusammenstellen von Artikeln (3) zu Kundenaufträgen (4) entsprechenden Packaufträgen (5) eingerichtet ist, wobei der Sortierförderer (2) einen Puffer (6) für die Zwischenlagerung von Artikeln (3) aufweist, und wobei der Puffer (6) über eine Schnittstelle mit einem Warenlager (7) verbindbar ist, wobei an der Schnittstelle Artikel (3) zwischen dem Puffer (6) und dem Warenlager (7) transferiert werden können;
und mit einer Systemsteuerungseinrichtung (8), welche dazu eingerichtet ist:
- eine für einen künftigen Zeitabschnitt erwartete Artikelnachfrage (9) zu bestimmen oder zu erhalten;
- und den Transfer der der erwarteten Artikelnachfrage (9) entsprechenden Artikel (10) vom Warenlager (7) an den Puffer (6) zu veranlassen.

2. System nach Anspruch 1, bei dem die Systemsteuerungseinrichtung (8) ferner dazu eingerichtet ist:
- die für den künftigen Zeitabschnitt tatsächlich benötigten Artikel (11) anhand von eingegangenen Kundenaufträgen (4) zu bestimmen;
- die tatsächlich benötigten Artikel (11) mit den im Puffer befindlichen Artikeln abzugleichen, um die zur Erfüllung der eingegangenen Kundenaufträge (4) fehlenden Artikel (12) zu bestimmen; und
- den Transfer der fehlenden Artikel (12) vom Warenlager (7) an den Puffer (6) zu veranlassen.

3. System (1) nach Anspruch 1 oder 2, bei dem die Systemsteuerungseinrichtung (8) dazu eingerichtet ist, die für einen künftigen Zeitabschnitt erwartete Artikelnachfrage (9) aus in vergangenen Zeitabschnitten, in Echtzeit und/oder in Prognosen erhobenen Kundenauftragsdetails zu bestimmen.

4. System nach einem der Ansprüche 1 bis 3, wobei die erwartete Artikelnachfrage auf Basis mindestens einer der folgenden Datenquellen bestimmt wird:
Umsatz- und Einnahmedaten, Besucherdaten, Traffic-Quellen, Produktleistungen, Kundenverhalten, Historische Verkaufsdaten, Kundenverhalten, Lagerbestandsdaten, Preisentwicklungen, Saisonalitäten, Marketingaktivitäten und/oder Trends aus dem Internet.

5. System nach einem der vorangehenden Ansprüche, wobei das Bestimmen der für einen künftigen Zeitabschnitt erwarteten Artikelnachfrage (9) auf Basis mindestens eines der folgenden Schritte erfolgt:
Beziehen von Echtzeitdaten, Laden der Echtzeitdaten, Definieren von Merkmalen und/oder Zielvariablen, Aufteilen der Daten in zumindest ein Trainings- und zumindest ein Testset, Erstellen und Trainieren eines Modells, Treffen von Vorhersagen, Vergleichen der Vorhersagen mit tatsächlichen Werten.

6. System nach einem der vorangehenden Ansprüche, wobei ein Algorithmus für das Bestimmen der für einen künftigen Zeitabschnitt erwarteten Artikelnachfrage vorgesehen ist, welcher durch maschinelles Lernen und/oder künstliche Intelligenz dazu eingerichtet ist, die Genauigkeit der erwarteten Artikelnachfrage zu optimieren.

7. System (1) nach einem der Ansprüche 1 bis65, bei dem das Bestimmen einer erwarteten Artikelnachfrage (9) für einen künftigen Zeitabschnitt kontinuierlich erfolgt.

8. System (1) nach einem der vorangehenden Ansprüche, bei dem die Systemsteuerungseinrichtung (8) dazu eingerichtet ist, den Transfer der der erwarteten Artikelnachfrage (9) des künftigen Zeitabschnitts entsprechenden Artikel (10) vom Warenlager (7) an den Puffer (6) zu veranlassen, bevor die entsprechenden Kundenaufträge (4) vollständig eingegangen sind.

9. System (1) nach einem der vorangehenden Ansprüche, bei dem der Sortierförderer (2) dazu eingerichtet ist, die den Kundenaufträgen (4) entsprechenden Packaufträge (5) aus den im Puffer (6) befindlichen Artikeln zusammenzustellen.

10. System (1) nach einem der vorangehenden Ansprüche, bei dem das System (1) ferner dazu eingerichtet ist, Artikelretouren in den Puffer einzuspeisen.

11. System (1) nach einem der vorangehenden Ansprüche, bei dem die Systemsteuerungseinrichtung (8) ferner dazu eingerichtet ist, den Transfer zumindest eines Teils der nach Bearbeitung der Kundenaufträge (4) für den Zeitabschnitt nicht benötigten Artikel (13) vom Puffer (6) zurück an das Warenlager (7) zu veranlassen.

12. System (1) nach einem der vorangehenden Ansprüche, bei dem der Puffer (6) Teil des Sortierförderers (2) ist.

13. System (1) nach einem der vorangehenden Ansprüche, bei dem der Puffer (6) dazu eingerichtet ist, eine Mehrzahl Transporteinheiten zwischenzuspeichern, welche jeweils zur Aufnahme einzelner Artikel (3) eingerichtet sind.

14. System (1) nach einem der vorangehenden Ansprüche, das ferner eine an einer Schnittstelle zwischen dem Warenlager (7) und dem Sortierförderer (2) angeordnete Beladestation (14) zum Beladen der Transporteinheiten des Sortierförderers (2) mit Artikeln (3) aus dem Warenlager (7) aufweist.

15. System (1) nach Anspruch 14, wobei die Beladestation (14) fördertechnisch mit dem Puffer (6) verbunden ist.

16. System (1) nach einem der vorangehenden Ansprüche, wobei der Sortierförderer (2) ferner zumindest eine Entladestation (15) aufweist, welche zum Abladen der einem jeweiligen Packauftrag (5) entsprechenden Artikel dient.

17. System (1) nach einem der vorangehenden Ansprüche, wobei die Systemsteuerungseinrichtung (8) ferner ein Unternehmensressourcenplanungsmodul (16) aufweist, welches zum Empfangen und Verarbeiten der Kundenaufträge (4) eingerichtet ist.

18. System (1) nach einem der vorangehenden Ansprüche, wobei die Systemsteuerungseinrichtung (8) ferner ein Lagerverwaltungssystem (17) zur Verwaltung des Warenlagers (7) aufweist, welches dazu eingerichtet ist, seitens des Unternehmensressourcenplanungsmoduls (16) Informationen über die den Kundenaufträgen (4) entsprechenden Artikel zu erhalten.

19. System (1) nach einem der vorangehenden Ansprüche, wobei die Systemsteuerungseinrichtung (8) ferner ein Steuerungsmodul (18) aufweist, welches zum Steuern des Warenlagers (7) und/oder des Sortierförderers (2) eingerichtet ist.

## Geänderte Patentansprüche

### Geänderte Patentansprüche gemäss Regel 137(2) EPÜ.

1. System (1) zur optimierten Verwendung eines Sortierförderers (2), insbesondere eines Taschensorters,
mit einem Sortierförderer (2), der zum Zusammenstellen von Artikeln (3) zu Kundenaufträgen (4) entsprechenden Packaufträgen (5) eingerichtet ist, wobei der Sortierförderer (2) einen Puffer (6) für die Zwischenlagerung von Artikeln (3) aufweist, und wobei der Puffer (6) über eine Schnittstelle mit einem Warenlager (7) verbindbar ist, wobei an der Schnittstelle Artikel (3) zwischen dem Puffer (6) und dem Warenlager (7) transferiert werden können;
und mit einer Systemsteuerungseinrichtung (8), welche dazu eingerichtet ist:
- eine für einen künftigen Zeitabschnitt erwartete Artikelnachfrage (9) zu bestimmen oder zu erhalten;
- und den Transfer der der erwarteten Artikelnachfrage (9) entsprechenden Artikel (10) vom Warenlager (7) an den Puffer (6) zu veranlassen,
**dadurch gekennzeichnet, dass** bei dem die Systemsteuerungseinrichtung (8) dazu eingerichtet ist, die für einen künftigen Zeitabschnitt erwartete Artikelnachfrage (9) aus in vergangenen Zeitabschnitten, in Echtzeit und/oder in Prognosen erhobenen Kundenauftragsdetails zu bestimmen.

2. System nach Anspruch 1, bei dem die Systemsteuerungseinrichtung (8) ferner dazu eingerichtet ist:
- die für den künftigen Zeitabschnitt tatsächlich benötigten Artikel (11) anhand von eingegangenen Kundenaufträgen (4) zu bestimmen;
- die tatsächlich benötigten Artikel (11) mit den im Puffer befindlichen Artikeln abzugleichen, um die zur Erfüllung der eingegangenen Kundenaufträge (4) fehlenden Artikel (12) zu bestimmen; und
- den Transfer der fehlenden Artikel (12) vom Warenlager (7) an den Puffer (6) zu veranlassen.

3. System nach einem der Ansprüche 1 bis 3, wobei die erwartete Artikelnachfrage auf Basis mindestens einer der folgenden Datenquellen bestimmt wird:
Umsatz- und Einnahmedaten, Besucherdaten, Traffic-Quellen, Produktleistungen, Kundenverhalten, Historische Verkaufsdaten, Kundenverhalten, Lagerbestandsdaten, Preisentwicklungen, Saisonalitäten, Marketingaktivitäten und/oder Trends aus dem Internet.

4. System nach einem der vorangehenden Ansprüche, wobei das Bestimmen der für einen künftigen Zeitabschnitt erwarteten Artikelnachfrage (9) auf Basis mindestens eines der folgenden Schritte erfolgt:
Beziehen von Echtzeitdaten, Laden der Echtzeitdaten, Definieren von Merkmalen und/oder Zielvariablen, Aufteilen der Daten in zumindest ein Trainings- und zumindest ein Testset, Erstellen und Trainieren eines Modells, Treffen von Vorhersagen, Vergleichen der Vorhersagen mit tatsächlichen Werten.

5. System nach einem der vorangehenden Ansprüche, wobei ein Algorithmus für das Bestimmen der für einen künftigen Zeitabschnitt erwarteten Artikelnachfrage vorgesehen ist, welcher durch maschinelles Lernen und/oder künstliche Intelligenz dazu eingerichtet ist, die Genauigkeit der erwarteten Artikelnachfrage zu optimieren.

6. System (1) nach einem der Ansprüche 1 bis 5, bei dem das Bestimmen einer erwarteten Artikelnachfrage (9) für einen künftigen Zeitabschnitt kontinuierlich erfolgt.

7. System (1) nach einem der vorangehenden Ansprüche, bei dem die Systemsteuerungseinrichtung (8) dazu eingerichtet ist, den Transfer der der erwarteten Artikelnachfrage (9) des künftigen Zeitabschnitts entsprechenden Artikel (10) vom Warenlager (7) an den Puffer (6) zu veranlassen, bevor die entsprechenden Kundenaufträge (4) vollständig eingegangen sind.

8. System (1) nach einem der vorangehenden Ansprüche, bei dem der Sortierförderer (2) dazu eingerichtet ist, die den Kundenaufträgen (4) entsprechenden Packaufträge (5) aus den im Puffer (6) befindlichen Artikeln zusammenzustellen.

9. System (1) nach einem der vorangehenden Ansprüche, bei dem das System (1) ferner dazu eingerichtet ist, Artikelretouren in den Puffer einzuspeisen.

10. System (1) nach einem der vorangehenden Ansprüche, bei dem die Systemsteuerungseinrichtung (8) ferner dazu eingerichtet ist, den Transfer zumindest eines Teils der nach Bearbeitung der Kundenaufträge (4) für den Zeitabschnitt nicht benötigten Artikel (13) vom Puffer (6) zurück an das Warenlager (7) zu veranlassen.

11. System (1) nach einem der vorangehenden Ansprüche, bei dem der Puffer (6) Teil des Sortierförderers (2) ist.

12. System (1) nach einem der vorangehenden Ansprüche, bei dem der Puffer (6) dazu eingerichtet ist, eine Mehrzahl Transporteinheiten zwischenzuspeichern, welche jeweils zur Aufnahme einzelner Artikel (3) eingerichtet sind.

13. System (1) nach einem der vorangehenden Ansprüche, das ferner eine an einer Schnittstelle zwischen dem Warenlager (7) und dem Sortierförderer (2) angeordnete Beladestation (14) zum Beladen der Transporteinheiten des Sortierförderers (2) mit Artikeln (3) aus dem Warenlager (7) aufweist.

14. System (1) nach Anspruch 14, wobei die Beladestation (14) fördertechnisch mit dem Puffer (6) verbunden ist.

15. System (1) nach einem der vorangehenden Ansprüche, wobei der Sortierförderer (2) ferner zumindest eine Entladestation (15) aufweist, welche zum Abladen der einem jeweiligen Packauftrag (5) entsprechenden Artikel dient.

16. System (1) nach einem der vorangehenden Ansprüche, wobei die Systemsteuerungseinrichtung (8) ferner ein Unternehmensressourcenplanungsmodul (16) aufweist, welches zum Empfangen und Verarbeiten der Kundenaufträge (4) eingerichtet ist.

17. System (1) nach einem der vorangehenden Ansprüche, wobei die Systemsteuerungseinrichtung (8) ferner ein Lagerverwaltungssystem (17) zur Verwaltung des Warenlagers (7) aufweist, welches dazu eingerichtet ist, seitens des Unternehmensressourcenplanungsmoduls (16) Informationen über die den Kundenaufträgen (4) entsprechenden Artikel zu erhalten.

18. System (1) nach einem der vorangehenden Ansprüche, wobei die Systemsteuerungseinrichtung (8) ferner ein Steuerungsmodul (18) aufweist, welches zum Steuern des Warenlagers (7) und/oder des Sortierförderers (2) eingerichtet ist.
